# EUROPEAN PATENT SPECIFICATION

(11) **EP 1 285 544 B1**
(45) Date of publication and mention of the grant of the patent: **09.11.2005**
(21) Application number: 00922661.4
(22) Date of filing: 20.04.2000
(51) Int. Cl.: H04Q 7/22

(54) **BASE STATION SUB-SYSTEM IN A MOBILE COMMUNICATION NETWORK**
BASISSTATIONSSUBSYSTEM IN EINEM MOBILKOMMUNIKATIONSNETZ
SOUS-ENSEMBLE DE STATION DE BASE DANS UN RESEAU DE TELECOMMUNICATIONS MOBILE

(43) Date of publication of application: 26.02.2003
(73) Proprietor: Nokia Corporation, 02150 Espoo (FI)
(72) Inventor: NIEMELÄ, Kari, FIN-90650 Oulu (FI); YLINEN, Pasi, FIN-01710 Vantaa (FI)
(74) Representative: Schippan, Ralph
(86) International application number: PCT/EP2000/003635
(87) International publication number: WO 2001/082637

(56) References cited:
- WO-A-96/09708
- WO-A-98/57509
- WO-A-99/16266
- WO-A-99/53704
- US-A- 5 978 368

## Description

The invention relates to a base station sub-system (BSS) in a mobile communication network, in particular a cellular mobile communication network, comprising a controller unit, where said controller unit is connected to a circuit switched network generating a plurality of circuit switched data frames, and where said controller unit is connected to a packet switched network generating a plurality of packet switched data frames.

In today's mobile communication networks, mainly circuit switched data services are used. The European Telecommunications Standard Institute (ETSI) has standardised a packet switched data communication protocol that uses the established global system for mobile communication network (GSM) components. This packet switched data protocol, namely general packet radio service (GPRS), enables packet switched data services with the existing global system for mobile communication. A general packet radio service enabled mobile station (MS) can attach to the GPRS core network via the existing global system for mobile communication network air interfaces (Uₘ). The ETSI has standardised three different classes of GPRS enabled mobile station. Class C mobile stations only support GPRS communication and not GSM communication. These are the simplest data terminals. Class B mobile stations can establish either GPRS communication or GSM communication, but not simultaneously. Class A mobile stations are enabled to establish GPRS and GSM communication simultaneously, but each communication has to establish at least one dedicated channel. These GPRS enabled mobile station MS can use between one to eight channels for GPRS communication over an air interface. The channels can be allocated dynamically to and by a mobile station according to the traffic generated by the mobile station or the network. Uplink and downlink channels are reserved separately during a GPRS communication, thus making it possible to have multislot mobile stations with various uplink and downlink capabilities. The resource allocation for GPRS communication is dynamic and dependent on demand and resource availability. With GPRS point-to-point as well as point-to-multipoint communication is possible. The maximum available bandwidth of a GPRS connection is 171,2 Kbps per mobile station, using all eight available channels without error correction.

A base station sub-system comprising a base transceiver station (BTS) and a base station controller (BSC) is connected to the GPRS core network, which is a packet switched network, as well as to the GSM core network, which is a circuit switched network, and from there onto a public switched telephone network (PSTN). In the base station controller the packet switched data frames as well as the circuit switched data frames are transferred onto dedicated transmission data frames separately, which are transmitted via the air interface over at least two dedicated channels to dedicated mobile stations.

A shortcoming of known systems is that a standard class B or C GPRS enabled mobile station can either have a GPRS connection or a GSM connection. That means that in case a circuit switched call is established, packet switched data frames cannot be transmitted to the mobile station.

After a circuit switched call is finished, the mobile station can again attach to the GPRS core network, enabling packet switched data frames to be transmitted. Class A GPRS enabled mobile stations can establish simultaneously a GPRS connection and a GSM connection. But in that case, at least two dedicated channels, one for GPRS data and another for GSM data/speech have to be established. In an usual circuit switched speech call, not all circuit switched data frames are filled with speech, e.g. pulse code modulated (PCM) data. In case no speech is to be transmitted, these circuit switched data frames are filled with idle data frames, which do not contain any information relevant for the speech to be understood. Thus a huge amount of available bandwidth is wasted by the transmission of idle circuit switched data frames.

US-A-5 978 368 discloses a base station sub-system and corresponding operating method according to the preambles of respective claims 1 and 10, comprising a controller unit connected to a circuit-switched (CS) and to a packet-switched (PS) method. Furthermore, WO 96/09708 A2 describes, in a similar system, the multiplexing of GPRS packet data onto a CS connection during intervals in which speech or other data are sent via said CS connection, thereby using the same traffic channel for transferring both CS and PS data.

The object of the invention is to enable a simultaneous circuit switched and packet switched communication over one dedicated channel between a base station sub-system and a mobile station.

This object is met by the base station sub-system as defined in claim 1 and by the method for operating a base station sub-system as defined in claim 10.

Because of this, the transmission data frames that are transmitted within one dedicated channel between a mobile station and a base transceiver station contain circuit switched data frames as well as packet switched data frames. In the mobile station, these data frames are demultiplexed and associated to the corresponding communication context. With such a packet control unit, it is possible to transmit packet switched data; which can be short messages (SMS) or even E-mail, during an active circuit switched call over the active circuit switched call connection. Thereby the user is enabled to be attached to, and communicate with the packet switched network over the active circuit switched connection. Only one dedicated channel has to be used and thus network resources are saved. The packet switched context can be TCP/IP or X.25 or any other packet switched protocol.

To exchange the packet switched data frames coming from the packet switched network, the circuit switched data frames coming from the circuit switched network, and the transmission data frames transmitted between base transceiver station and mobile station, said controller unit comprises a switching unit. The switching unit switches said circuit switched data frames between said packet control unit and said circuit switched network as well as said packet switched data frames between said packet control unit and said packet switched network. Said transmission data frames are switched by the switching unit between said transceiver unit and said packet control unit.

In downlink direction, which means from packet/circuit switched network to mobile station, the packet switched data frames coming from the packet switched network and the circuit switched data frames coming from the circuit switched network are switched by the switching unit to said packet control unit. In said packet control unit, said packet switched data frames and said circuit switched data frames are multiplexed into said transmission data frames. Theses transmission data frames are send via the switching unit to said transceiver unit.

The transceiver unit transmits these transmission data frames over an air interface on a dedicated channel to a dedicated mobile station.

In uplink direction, that means from mobile station to network, the transmission data frames coming over the air interface on a dedicated channel from a dedicated mobile station are switched from said transceiver unit to said packet control unit by said switching unit. In said packet control unit these transmission data frames are demultiplexed in a way that said packet switched data frames within said transmission data frames can be send to said packet switched network via said switching unit and that said circuit switched data frames within said transmission data frames can be send to said circuit switched network via said switching unit.

Said packet control unit can be located either within said controller unit or spatially apart from said controller unit. That means that either said controller unit can comprise said packet control unit or that said packet control unit can be located outside said controller unit, for example in an front-end of said packet switched network.

As circuit switched calls, in particular circuit switched speech calls, contain many idle frames, it is advantageous that said multiplexing means in said packet control unit replace said circuit switched data frames during silent periods with said packet switched data frames and thus generate said transmission data frames in downlink direction. Speech calls do not contain speech data during all times. In case the user is silent, idle frames, in particular discontinuous transmission frames (DTX), are placed in the stream of said circuit switched data frames. These idle frames do only contain the information that the user is silent and provide information for frame synchronisation in the mobile station as well as in a transcoder unit (TC). In said packet control unit, these silent frames are removed and replaced by packet switched data frames coming from said packet switched network. Thus said transmission data frames in downlink direction are filled with either circuit switched data frames or packet switched data frames. The available bandwidth of a dedicated channel is thus used more efficiently.

In uplink direction, said transmission data frames contain packet switched data frames as well as circuit switched data frames. To extract these and make them available for said packet switched network as well as said circuit switched network, said demultiplexing means in said packet control unit remove said packet switched data frames from said transmission data frames and replace said removed data frames with silent data frames and thus extract said packet switched data frames and generate said circuit switched data frames in uplink direction. Each removed packet switched data frame from said transmission data frames has to be replaced by an idle data frame because of frame synchronisation in the transcoder unit. Said removed packet switched data frames are send to said packet switched network and said circuit switched data frames, after being filled with idle data frames, are send to said circuit switched network.

In particular the invention is applicable in a network structure where said circuit switched network is a global system for mobile communication, generating circuit switched data frames with speech and data, and where said packet switched network is a general packet radio system, generating said packet switched data frames.

Said circuit switched network is front-ended by a transcoder unit. The transcoder unit is connected to the base station sub-system via, for example an Aₜₑᵣ interface. The circuit switched data frames contain pulse code modulated data for speech and data connections. The transcoder unit is on the network side connected to a circuit switched network, for example to a mobile switching centre (MSC).

Said packet switched network is front-ended by a serving GPRS support node (SGSN). The serving GPRS support node is connected to the base station system via, for example a G_{B} interface. Frame Relay based network services provide flow control for this interface.

Another aspect of the invention is a method for operating a base station sub-system in a mobile communication network, in particular a cellular mobile communication network, comprising a controller unit where said controller unit is connected to a circuit switched network generating a plurality of circuit switched data frames, and where said controller unit is connected to a packet switched network generating a plurality of packet switched data frames where said circuit switched data frames and said packet switched data frames are multiplexed/demultiplexed by multiplexing/demultiplexing means of a packet control unit to/from a plurality of transmission data frames. The data frames of said packet switched network and said circuit switched network, belonging to a dedicated communication context with a mobile station, are multiplexed onto one single succession of transmission data frames, which are send to said dedicated mobile station over a communication channel in downlink direction. In uplink direction the transmission data frames are demultiplexed into data frames of said packet switched network and data frames of said circuit switched network.

In downlink direction idle frames of said circuit switched data frames are replaced by packet switched data frames and thus transmission data frames are generated. In uplink direction data frames are removed from transmission data frames and thus packet switched data frames are generated and said removed packet switched data frames are replaced with idle data frames and thus circuit switched data frames are generated. Thus the bandwidth of one dedicated channel is used more efficiently because idle data frames can be replaced by packet switched data frames. Over one established channel communication with a circuit switched network as well as a packet switched network is possible.

When said packet switched data frames are switched between a GPRS core network and a packet control unit and said circuit switched data frames are switched between a GSM core network and said packet control unit and transmission data frames are switched between said packet control unit and a transceiver unit it is possible to have said packet control unit spatially apart from a base transceiver station. All data frames being transmitted over an air interface are switched to and from said packet control unit, where they can be multiplexed/demultiplexed.

In the following, possible embodiments of the invention are depicted in the drawing in which:
- Fig. 1: shows the network structure of a GSM/GPRS network;
- Fig. 2: shows a base station sub-system being connected to a GPRS core network;
- Fig. 3: shows another embodiment of a base station subbeing connected to a GPRS core network;
- Fig. 4: shows a base station sub-system according to the invention;
- Fig. 5: shows another embodiment of a base station sub-system according to the invention;
- Fig. 6: shows a frame structure of downlink frames;
- Fig. 7: shows a frame structure of uplink frames.

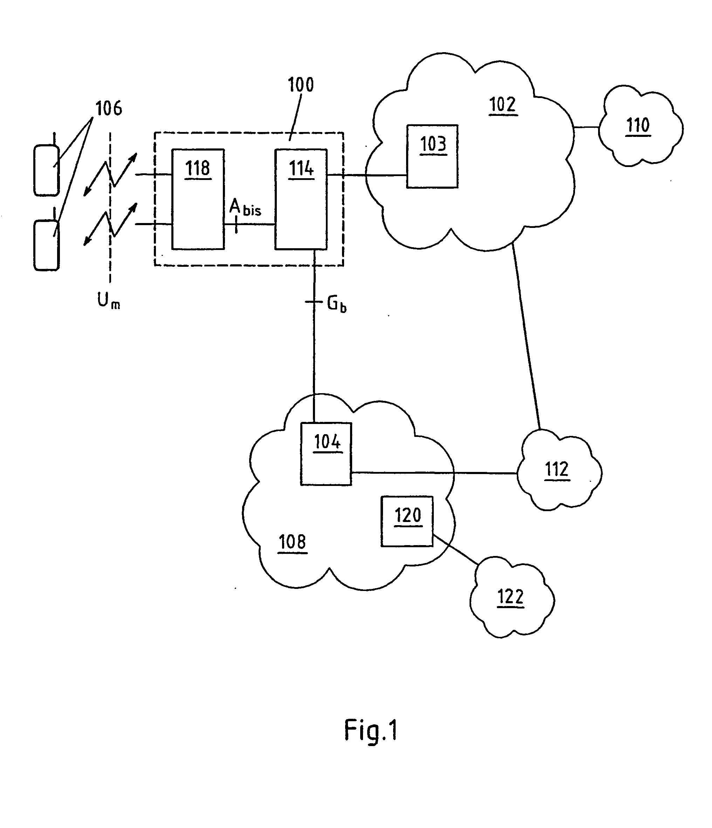

In Fig. 1, one part of a global system for mobile communication (GSM) network comprising general packet radio service (GPRS) functionality is depicted. A base station sub-system 100 (BSS) comprises a base transceiver station 118 (BTS) and a base station controller 114 (BSC). The base transceiver station 118 is able to communicate with a mobile station 106 (MS) via the air interface Uₘ. Said base transceiver station 118 is connected to said base station controller 114 via an A_{bis} interface. Said base station controller 114 is connected to a GSM core network 102 . A switching functionality of said GSM core network 102 is achieved by a plurality of mobile switching centres 103 (MSC). These mobile switching centres 103 are interconnected and connected to a plurality of base station sub-systems such as the depicted base station sub-system 100. Said GSM core network 102 is also connected to a public switched telephone network 110 (PSTN). Thus communication between a mobile station and a fixed line subscriber is possible.

Said base station controller 114 is also connected to a GPRS core network 108. The GPRS core network 108 is front-ended by a serving GPRS support node 104 (SGSN). The connection between said serving GPRS support node 104 and said base station controller 114 is achieved over a G_{b} interface. Said GPRS core network 108 comprises all GPRS functionality, for example point-to-point services. Gateway GPRS service nodes 120 (GGSN) enable the GPRS core network 108 to be connected for example to the Internet 122. Signalling within GPRS and GSM is achieved via a signalling network 112 (SS7).

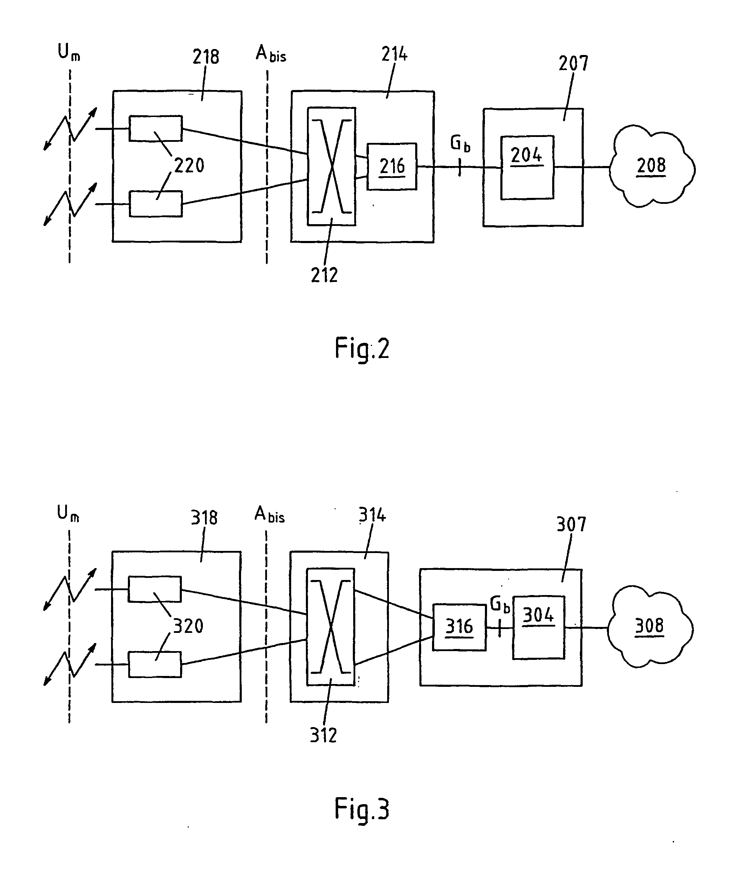

In Fig. 2 a known structure of a base station sub-system with a connection to a GPRS core network 208 is shown. The GPRS front-end 207 comprises a serving GPRS support node 204. Packet switched data frames coming from said GPRS core network 208 are routed by the serving GPRS support node 204 over a *G*_{b} interface to a base station controller 214. Within said base station controller 214, a packet control unit 216 (PCU) is located. Said packet control unit 216 distributes incoming packet switched data frames to their dedicated channels, respectively. A switching functionality 212 switches each dedicated channel onto a channel control unit 220 (CCU). Said base station controller 214 is connected to a base transceiver station 218 via an A_{bis} interface. Each channel control unit 220 handles a communication with a dedicated mobile station (not depicted) via an air interface Uₘ.

In Fig. 3 a base station sub-system is depicted, which differs only slightly from the base station sub-system depicted in Fig. 2. The GPRS front-end 307 comprises a serving GPRS support node 304. Packet switched data frames coming from, and being directed to a GPRS core network 308 are routed via said serving GPRS support node 304. Said serving GPRS support node 304 is connected to a packet control unit 316 via a G_{b} interface. In said packet control unit 316, said circuit switched data frames are distributed onto their dedicated communication channels, respectively. These communication channels are switched in a switching functionality 312, being located in a base station controller 314. Dedicated communication channels are established between switching functionality 312 and channel control units 320 via an A_{bis} interface. Said channel control units 320 are located within a base transceiver station 318. Via air interface Uₘ, communication is made available between a mobile station (not depicted) and said channel control units 320.

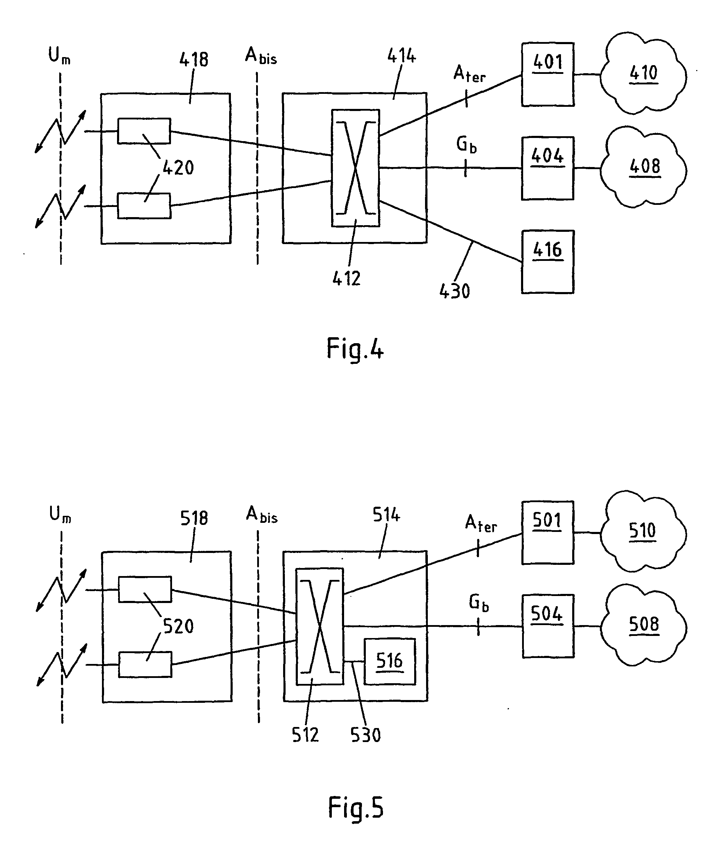

In Fig. 4 a base station sub-system according to the invention is depicted. A base station controller 414 comprises switching functionality 412. Said switching functionality 412 switches dedicated channels to dedicated channel control units 420 over interface A_{bis}, respectively. Said channel control units 420 are located in a base transceiver station 418. Communication is made available by said channel control units 420 over the air interface Uₘ. A GSM core network 410 is front-ended by a transcoder unit 401 (TC) and connected to said switching functionality 412 via an Aₜₑᵣ interface. A GPRS core network 408 is front-ended by a serving GPRS support node 404, which is connected to said switching functionality 412 via a G_{b} interface. Said switching functionality 412 is connected to a packet control unit 416 via connection 430. The depicted base station sub-system functions as follows:

Transmission data frames coming from said channel control units 420 are transmitted to said switching functionality 412 over interface A_{bis}. Said switching functionality 412 switches these transmission data frames to said packet control unit 416 via connection 430. In said packet control unit 416 said transmission data frames are demultiplexed.

Packet switched data frames are removed from said transmission data frames. These removed packet switched data frames are routed via connection 430 and switching functionality 412 to said serving GPRS support node 404. After that, these packet switched data frames are handled according to GPRS protocols.

Also in said packet control unit, packet switched data frames are in said transmission data frames and replaced by idle data frames. After removal and replacement, said transmission data frames can be send to said transcoder unit 401 as circuit switched data frames. Frame synchronisation in said transcoder unit 401 is achieved due to the inserted idle data frames. In said transcoder unit 401 said circuit switched data frames are handled according to the GSM protocol.

In downlink direction, circuit switched data frames coming from said transcoder unit 401 are send to said switching functionality 412 via said Aₜₑᵣ interface. Packet switched data frames coming from said GPRS core network 408 are send by said serving GPRS support node 404 via said G_{b} interface to said switching functionality 412. Said switching functionality 412 switches said packet switched and said circuit switched data frames to said packet control unit 416 via connection 430. In said packet control unit 416, idle data frames in said circuit switched data frames are replaced by packet switched data frames directed to the same mobile station as said circuit switched data frames.

It is understood that packet switched data frames and circuit switched data frames can only be multiplexed to, and demultiplexed from transmission data frames in case said circuit switched data frames and said packet switched data frames are directed to, or coming from one dedicated communication channel, e.g. one dedicated mobile station.

In Fig. 5 a base station sub-system according to the invention is depicted. The only difference to Fig. 4 is that packet control unit 516 is located within base station controller 514. GSM core network 510 is front-ended by transcoder unit 501 and connected to said base station controller 514 via an Aₜₑᵣ interface. GPRS core network 508 is front-ended by serving GPRS support node 504 and connected to said base station controller 514 via a G_{b} interface. Switching functionality 512 switches packet switched data frames and circuit switched data frames to and from packet control unit 516 via connection 530.

Transmission data frames coming from said packet control unit 516, containing circuit switched data frames, and packet switched data frames of one dedicated connection are switched by switching functionality 512 to a dedicated channel control unit 520, being located within base transceiver station 518 over a A_{bis} Interface. Communication with a mobile station (not depicted) is made available over an Uₘ air interface.

Received transmission data frames are switched by switching functionality 512 via connection 530 to packet control unit 516. Within packet control unit 516 these transmission data frames, containing packet switched and circuit switched data frames of one dedicated connection, are demultiplexed in way that packet switched data frames of this connection can be send to said serving GPRS support node 504 and that circuit switched data frames of this connection can be send to said transcoder unit 501. Said circuit switched data frames are generated in a way, that each packet switched data frame within said received transmission data frames is replaced with an idle data frame.

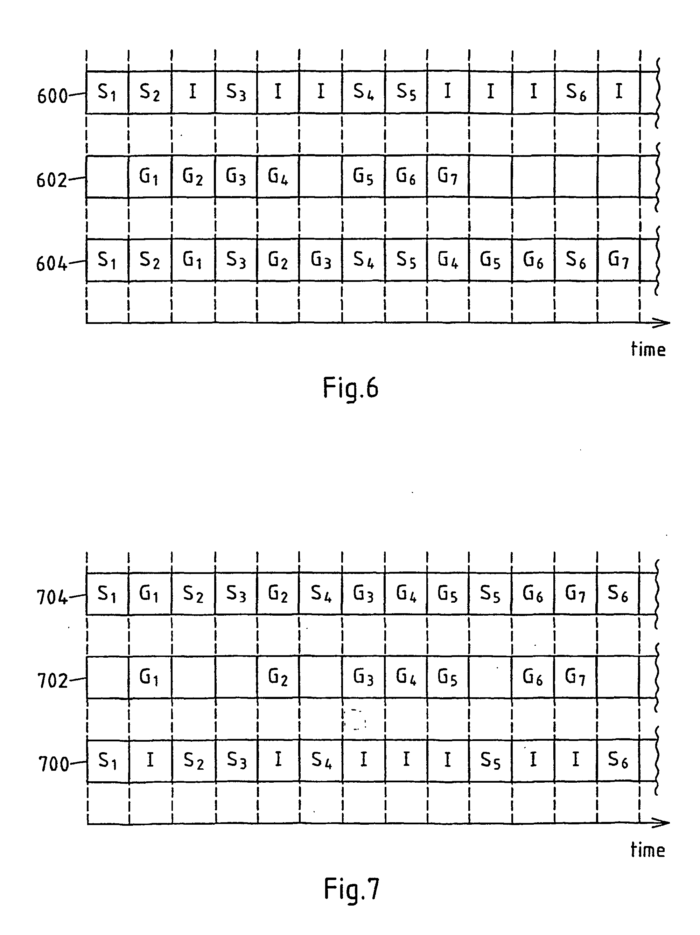

In Fig. 6 a succession of data frames in downlink direction is depicted. A succession of data frames 600 coming from an Aₜₑᵣ interface is multiplexed with a succession of data frames 602 coming from G_{b} interface into a succession of transmission data frames 604 being send to A_{bis} interface. Speech frames S₁ to S₆ of circuit switched data frame succession 600 are multiplexed into transmission data frame succession 604 in a way that these data frames S₁ to S₆ are located in exactly the same time slots in both successions of data frames 600, 604. The packet switched data frames G₁ to G₇ are multiplexed onto said transmission data frames 604 in a way that they are located in time slots where circuit switched data frame succession 600 contains idle I data frames. Said packet switched data frames G₁ to G₇ can be GPRS data frames or Enhanced Data rates for GSM Evolution (EDGE) data frames or Enhanced General Packet Radio Service (EGPRS) data frames.

In Fig. 7 a succession of transmission data frames 704, coming from a mobile station, is depicted. Transmission data frames of said transmission data frame succession 704, containing circuit switched data frames S₁ to S₆, are demultiplexed onto a succession of circuit switched data frames 700. Said circuit switched data frames S₁ to S₆ are located in said succession of circuit switched data frames 700 at exactly the same time slots as on said succession of transmission data frames 704. In case said succession of transmission data frames 704 contains packet switched data frames G₁ to G₇, said succession of circuit switched data frames 700 is filled with idle data frames I. Said packet switched data frames G₁ to G₇ are demultiplexed onto a succession of packet switched data frames 702. Said succession of packet switched data frames 702 is send over a G_{b} interface to a serving GPRS support node. Said succession of circuit switched data frames 700 is send to a transcoding unit, where said succession of data frames 700 is handled according to the appropriate communication protocol. Said transcoder unit is able to maintain frame synchronisation because of said inserted idle data frames I.

## Claims

1. Base station sub-system in a mobile communication network, in particular a cellular mobile communication network, comprising:
- a controller unit (414, 514),
- where said controller unit (414, 514) is connected to a circuit switched network (410, 510) generating a plurality of circuit switched data frames (600),
where said controller unit (414, 514) is connected to a packet switched network (408, 508) generating a plurality of packet switched data frames (602),
**characterised in that**
- a packet control unit (416, 516) comprises multiplexing/demultiplexing means,
multiplexing/demultiplexing said circuit switched data frames (600) and said packet switched data frames (602) to/from a plurality of transmission data frames (604), and
- said controller unit (414, 514) comprises a switching unit (412, 512), switching said circuit switched data frames (600) between said packet control unit (416, 516) and said circuit switched network (410, 510) and said packet switched data frames (602) between said packet control unit (416, 516) and said packet switched network (408, 508) and said transmission data frames (604) between a transceiver unit (418, 518) and said packet control unit (416, 516).

2. Base station sub-system according to claim 1,
**characterised in that**
said controller unit (514) comprises said packet control unit (516).

3. Base station sub-system according to claims 1 or 2,
**characterised in that**
said packet control unit (416) is located spatially apart from said controller unit (414).

4. Base station sub-system according to claims 1 or 3,
**characterised in that**
said multiplexing means in said packet control unit (416, 516) are provided for replacing said circuit switched data frames during silent periods (I) with said packet switched data frames (G₁-G₇) and thus generating said transmission data frames (604) in downlink direction.

5. Base station sub-system according to claims 1 or 2,
**characterised in that**
said demultiplexing means in said packet control unit (416, 516) are provided for removing said packet switched data frames (G₁-G₇) from said transmission data frames (704) and replacing said removed data frames (G₁-G₇) with silent data frames (I) and thus extracting said packet switched data frames (702) and generating said circuit switched data frames (700) in uplink direction.

6. Base station sub-system according to claims 1 or 2,
**characterised in that**
said packet switched data frames (G₁-G₇) are general packet radio system data frames.

7. Base station sub-system according to claims 1 or 2,
**characterised in that**
said circuit switched data frames (S₁-S₆) are global system for mobile communication speech and data frames.

8. Base station sub-system according to claims 1 or 2,
**characterised in that**
said circuit switched network (410, 510) is connected to said controller unit (414, 514) via a transcoder unit (401, 501).

9. Base station sub-system according to claims 1 or 2,
**characterised in that**
said packet switched network (408, 508) is connected to said controller unit (414, 514) via a serving GPRS Support node (404, 504).

10. Method for operating a base station sub-system in a mobile communication network, in particular a cellular mobile communication network,
- comprising a controller unit (414, 514),
- where said controller unit (414, 514) is connected to a circuit switched network (410, 510) generating a plurality of circuit switched data frames (600),
- where said controller unit (414, 514) is connected to a packet switched network (408, 508) generating a plurality of packet switched data frames (602),
**characterised in that**
- said circuit switched data frames (600,700) and said packet switched data frames (602,702) are multiplexed/demultiplexed by multiplexing/demultiplexing means of a packet control unit (416, 516) to/from a plurality of transmission data frames (604,704), and
- said packet switched data frames (602, 702) are switched between a GPRS core network (408, 508) and a packet control unit (416, 516) and said circuit switched data frames (600, 700) are switched between a GSM core network (408, 508) and said packet control unit (416, 516) and transmission data frames (604, 704) are switched between said packet control unit (416, 516) and a transceiver unit (418, 518).

11. Method according to claim 10,
**characterised in that**
in downlink direction idle frames of said circuit switched data frames (I) are replaced by packet switched data frames (G₁-G₇) and thus transmission data frames (604) are generated.

12. Method according to claim 10,
**characterised in that**
in uplink direction packet switched data frames (G₁-G₇) are removed from transmission data frames (704) and thus packet switched data frames (702) are generated and said removed packet switched data frames (G₁-G₇) are replaced with idle data frames (I) and thus circuit switched data frames (700) are generated.

## Patentansprüche

1. Basisstationssubsystem (BSS) in einem mobilen Kommunikationsnetzwerk, insbesondere einem zellularen mobilen Kommunikationsnetzwerk, umfassend:
- eine Controllereinheit (414, 514),
- wobei die Controllereinheit (414, 514) an ein leitungsvermitteltes Netzwerk (410, 510) angeschlossen ist, das eine Mehrzahl von leitungsvermittelten Datenframes (600) erzeugt, wobei die Controllereinheit (414, 514) an ein paketvermitteltes Netzwerk (408, 508) angeschlossen ist, das eine Mehrzahl von paketvermittelten Datenframes (602) erzeugt,
**dadurch gekennzeichnet, daß**
- eine Paketsteuereinheit (416, 516) ein Multiplexier-/Demultiplexiermittel umfaßt, welches die leitungsvermittelten Datenframes (600) und die paketvermittelten Datenframes (602) zu/von einer Mehrzahl von Übertragungsdatenframes (604) multiplexiert/demultiplexiert, und
- die Controllereinheit (414, 514) eine Vermittlungseinheit (412, 512) umfaßt, welche die leitungsvermittelten Datenframes (600) zwischen der Paketsteuereinheit (416, 516) und dem leitungsvermittelten Netzwerk (410, 510) und die paketvermittelten Datenframes (602) zwischen der Paketsteuereinheit (416, 516) und dem paketvermittelten Netzwerk (408, 508) und die Übertragungsdatenframes (604) zwischen einer Sendeempfangseinheit (418, 518) und der Paketsteuereinheit (416, 516) vermittelt.

2. Basisstationssubsystem nach Anspruch 1, **dadurch gekennzeichnet, daß**
die Controllereinheit (514) die Paketsteuereinheit (516) umfaßt.

3. Basisstationssubsystem nach Anspruch 1 oder 2, **dadurch gekennzeichnet, daß**
die Paketsteuereinheit (416) räumlich getrennt von der Controllereinheit (414) angeordnet ist.

4. Basisstationssubsystem nach Anspruch 1 oder 3, **dadurch gekennzeichnet, daß**
die Multiplexingmittel in der Paketsteuereinheit (416, 516) dazu dienen, die leitungsvermittelten Datenframes während ruhiger Perioden (I) durch paketvermittelte Datenframes (G₁-G₇) zu ersetzen und somit die Übertragungsdatenframes (604) in Downlinkrichtung zu erzeugen.

5. Basisstationssubsystem nach Anspruch 1 oder 3, **dadurch gekennzeichnet, daß**
die Demultiplexingmittel in der Paketsteuereinheit (416, 516) dazu dienen, die paketvermittelten Datenframes (G₁-G₇) aus den Übertragungsdatenframes (604) zu entfernen und die entfernten Datenframes (G₁-G₇) durch ruhige Datenframes (I) zu ersetzen und somit die paketvermittelten Datenframes (702) zu extrahieren und die leitungsvermittelten Datenframes (700) in Uplinkrichtung zu erzeugen.

6. Basisstationssubsystem nach Anspruch 1 oder 2, **dadurch gekennzeichnet, daß**
die paketvermittelten Datenframes (G₁-G₇) Datenframes des allgemeinen Paketfunksystems sind.

7. Basisstationssubsystem nach Anspruch 1 oder 2, **dadurch gekennzeichnet, daß**
die leitungsvermittelten Datenframes (S₁-S₆) Sprach- und Datenframes des globalen Systems für mobile Kommunikationen sind.

8. Basisstationssubsystem nach Anspruch 1 oder 2, **dadurch gekennzeichnet, daß**
das leitungsvermittelte Netzwerk (410, 510) über eine Transcodereinheit (401, 501) an die Controllereinheit (414, 514) angeschlossen ist.

9. Basisstationssubsystem nach Anspruch 1 oder 2, **dadurch gekennzeichnet, daß**
das paketvermittelte Netzwerk (408, 508) über einen verwaltenden GPRS-Unterstützungsknoten (404, 504) an die Controllereinheit (414, 514) angeschlossen ist.

10. Verfahren zum Betreiben eines Basisstationssubsystems in einem mobilen Kommunikationsnetzwerk, insbesondere einem zellularen mobilen Kommunikationsnetzwerk,
- umfassend eine Controllereinheit (414, 514),
- wobei die Controllereinheit (414, 514) an ein leitungsvermitteltes Netzwerk (410, 510) angeschlossen ist, das eine Mehrzahl von leitungsvermittelten Datenframes (600) erzeugt,
- wobei die Controllereinheit (414, 514) an ein paketvermitteltes Netzwerk (408, 508) angeschlossen ist, das eine Mehrzahl von paketvermittelten Datenframes (602) erzeugt,
**dadurch gekennzeichnet, daß**
- die leitungsvermittelten Datenframes (600, 700) und die paketvermittelten Datenframes (602, 702) durch Multiplexier-/Demultiplexiermittel einer Paketsteuereinheit (416, 516) zu/von einer Mehrzahl von Übertragungsdatenframes (604, 704) multiplexiert/demultiplexiert werden, und
- die paketvermittelten Datenframes (602, 702) zwischen einem GPRS-Kernnetzwerk (408, 508) und einer Paketsteuereinheit (416, 516) und die leitungsvermittelten Datenframes (600, 700) zwischen einem GSM-Kernnetzwerk (408, 508) und dieser Paketsteuereinheit (416, 516) und die Übertragungsdatenframes (604, 704) zwischen dieser Paketsteuereinheit (416, 516) und einer Sendeempfangseinheit (41B, 51B) vermittelt werden.

11. Verfahren nach Anspruch 10,
**dadurch gekennzeichnet, daß**
in Downlinkrichtung inaktive Frames der leitungsvermittelten Datenframes (I) durch paketvermittelte Datenframes (G₁-G₇) ersetzt werden
und somit Übertragungsdatenframes (604) erzeugt werden.

12. Verfahren nach Anspruch 10,
**dadurch gekennzeichnet, daß**
in Uplinkrichtung paketvermittelte Datenframes (G₁-G₇) aus den Übertragungsdatenframes (704) entfernt und somit paketvermittelte Datenframes (702) erzeugt werden, und die entfernten paketvermittelten Datenframes (G₁-G₇) durch inaktive Datenframes (I) ersetzt und somit leitungsvermittelte Datenframes (700) erzeugt werden.

## Revendications

1. Sous-système de station de base dans un réseau de communication mobile, en particulier un réseau de communication mobile cellulaire, comprenant :
- une unité de contrôleur (414, 514),
- où ladite unité de contrôleur (414, 514) est connectée à un réseau à commutation de circuits (410, 510) générant une pluralité de trames de données à commutation de circuits (600), où ladite unité de contrôleur (414, 514) est connectée à un réseau à commutation de paquets (408, 508) générant une pluralité de trames de données à commutation de paquets (602),
**caractérisé en ce que**
- une unité de contrôle de paquets (416, 516) comprend des moyens de multiplexage/démultiplexage, multiplexant/démultiplexant lesdites trames de données à commutation de circuits (600) et lesdites trames de données à commutation de paquets (602) sur/à partir d'une pluralité de trames de données de transmission (604), et
- ladite unité de contrôleur (414, 514) comprend une unité de commutation (412, 512), commutant lesdites trames de données à commutation de circuits (600) entre ladite unité de contrôle de paquets (416, 516) et ledit réseau à commutation de circuits (410, 510) et lesdites trames de données à commutation de paquets (602) entre ladite unité de contrôle de paquets (416, 516) et ledit réseau à commutation de paquets (408, 508) et lesdites trames de données de transmission (604) entre une unité d'émetteur/récepteur (418, 518) et ladite unité de contrôle de paquets (416, 516).

2. Sous-système de station de base selon la revendication 1,
**caractérisé en ce que**
ladite unité de contrôleur (514) comprend ladite unité de contrôle de paquets (516).

3. Sous-système de station de base selon la revendication 1 ou 2,
**caractérisé en ce que**
ladite unité de contrôle de paquets (416) est située spatialement à l'écart de ladite unité de contrôleur (414).

4. Sous-système de station de base selon la revendication 1 ou 3,
**caractérisé en ce que**
lesdits moyens de multiplexage dans ladite unité de contrôle de paquets (416, 516) sont fournis pour remplacer lesdites trames de données à commutation de circuits pendant des périodes de silence (I) par lesdites trames de données à commutation de paquets (*G*₁ - *G*₇) et ainsi générer lesdites trames de données de transmission (604) dans la direction de la liaison descendante.

5. Sous-système de station de base selon la revendication 1 ou 2,
**caractérisé en ce que**
lesdits moyens de démultiplexage dans ladite unité de contrôle de paquets (416, 516) sont fournis pour supprimer lesdites trames de données à commutation de paquets (*G*₁-*G*₇) desdites trames de données de transmission (704) et remplacer lesdites trames de données supprimées (*G*₁-*G*₇) par des trames de données silencieuses (I) et ainsi extraire lesdites trames de données à commutation de paquets (702) et générer lesdites trames de données à commutation de circuits (700) dans la direction de la liaison montante.

6. Sous-système de station de base selon la revendication 1 ou 2,
**caractérisé en ce que**
lesdites trames de données à commutation de paquets (*G*₁ - *G*₇) sont des trames générales de données de système radio de paquets.

7. Sous-système de station de base selon la revendication 1 ou 2,
**caractérisé en ce que**
lesdites trames de données à commutation de circuits (*S*₁ - *S*₆) sont des trames de données et de discours de communications mobiles.

8. Sous-système de station de base selon la revendication 1 ou 2,
**caractérisé en ce que**
ledit réseau à commutation de circuits (410, 510) est connecté à ladite unité de contrôleur (414, 514) par l'intermédiaire d'une unité de transcodeur (401, 501).

9. Sous-système de station de base selon la revendication 1 ou 2,
**caractérisé en ce que**
ledit réseau à commutation de paquets (408, 508) est connecté à ladite unité de contrôleur (414, 514) par l'intermédiaire d'un noeud de support GPRS en service (404, 504).

10. Procédé d'exploitation d'un sous-système de station de base dans un réseau de communication mobile, en particulier un réseau de communication mobile cellulaire,
- comprenant une unité de contrôleur (414, 514),
- où ladite unité de contrôleur (414, 514) est connectée à un réseau à commutation de circuits (410, 510) générant une pluralité de trames de données à commutation de circuits (600),
- où ladite unité de contrôleur (414, 514) est connectée à un réseau à commutation de paquets (408, 508) générant une pluralité de trames de données à commutation de paquets (602),
**caractérisé en ce que**
- lesdites trames de données à commutation de circuits (600, 700) et lesdites trames de données à commutation de paquets (602, 502) sont multiplexées/démultiplexées par des moyens de multiplexage/démultiplexage d'une unité de contrôle de paquets (416, 516) sur/à partir d'une pluralité de trames de données de transmission (604, 704), et
- lesdites trames de données à commutation de paquets (602, 702) sont commutées entre un réseau de base GPRS (408, 508) et une unité de contrôle de paquets (416, 516) et lesdites trames de données à commutation de circuits (600, 700) sont commutées entre un réseau de base GSM (408, 508) et ladite unité de contrôle de paquets (416, 516) et les trames de données de transmission (604, 704) sont commutées entre ladite unité de contrôle de paquets (416, 516) et une unité d'émetteur-récepteur (418, 518).

11. Procédé selon la revendication 10,
**caractérisé en ce que**
dans la direction de la liaison descendante, les trames en veille parmi lesdites trames de données à commutation de circuits (I) sont remplacées par des trames de données à commutation de paquets (*G*₁-*G*₇) et des trames de données de transmission (604) sont ainsi générées.

12. Procédé selon la revendication 10,
**caractérisé en ce que**
dans la direction de la liaison montante, les trames de données à commutation de paquets (*G*₁-*G*₇) sont supprimées des trames de données de transmission (704) et des trames de données à commutation de paquets (702) sont ainsi générées et lesdites trames de données à commutation de paquets supprimées (*G*₁-*G*₇) sont remplacées par des trames de données en veille (I) et des trames de données à commutation de circuits (700) sont ainsi générées.
